# NEUE EUROPÄISCHE PATENTSCHRIFT

(11) **EP 1 450 616 B2**
(45) Veröffentlichungstag und Bekanntmachung des Hinweises auf die Entscheidung über den Einspruch: **31.08.2011**
(45) Hinweis auf die Patenterteilung: 01.08.2007
(21) Anmeldenummer: 02795026.0
(22) Anmeldetag: 03.12.2002
(51) Int. Cl.: A23B 7/157, A23B 7/148

(54) **GEWÜRZKRAUTZUBEREITUNG**
AROMATIC HERB PREPARATION
PREPARATION D'HERBES AROMATIQUES

(30) Priorität: 07.12.2001 DE 10160309
(43) Veröffentlichungstag der Anmeldung: 01.09.2004
(73) Patentinhaber: FUCHS GmbH & Co., 49326 Melle (DE)
(72) Erfinder: VAN AEFFERDEN, Baudouin, 49201 Dissen (DE)
(74) Vertreter: Holzwarth-Rochford, Andreas
(86) Internationale Anmeldenummer: PCT/DE2002/004669
(87) Internationale Veröffentlichungsnummer: WO 2003/049546

(56) Entgegenhaltungen:
- US-A- 4 832 969
- US-A- 5 858 446
- BELITZ; GROSCH: "Food Chemistry" 1999 , SPRINGER VERLAG , BERLIN HEIDELBERG GERMANY XP002231535 Seite 746, Absatz 2
- "The effects of pH and heat on vegetable pigment" INTERNET, [Online] XP002231534 Gefunden im Internet: <URL:http://members.tripod.com/~biofood/#p artI> [gefunden am 2003-02-18]

## Beschreibung

Die Erfindung betrifft eine konservierte Zubereitung mindestens eines Gewürzkrautes sowie ein Verfahren zur Herstellung einer derartigen Zubereitung.

Gewürzkräuter werden frisch, tiefgefroren oder getrocknet eingesetzt. Die höchste organoleptische Qualität weist sicherlich ein frisches Kraut auf. Nachteilig ist, dass einem zerkleinerten Gewürz nicht anzusehen ist, ob es tatsächlich noch frisch ist. Durch das Tieffrieren kann der Frischezustand verlängert und somit eine Lagerungsmöglichkeit geschaffen werden. Nachteilig am Tieffrieren ist der apparative Aufwand und die geschmackliche und optische Beeinträchtigung der tiefgefrorenen Produkte gegenüber Frischprodukten.

Auch getrocknete Kräuter erlauben eine lange Aufbewahrungsdauer. Hierfür ist es allerdings erforderlich, den Feuchtegehalt auf 12% oder weniger zu senken. Bei der Entwässerung (Dehydratisierung) erleiden die Kräuter aber einen Aromaverlust infolge Verdampfung des Wassers während des Trocknens, insbesondere in der letzten Phase der Trocknung, und/oder durch die Oxidation empfindlicher Geschmacksstoffe während der Lagerung. Mit der Trocknung der Gewürzpflanzen oder Teilen davon ist häufig eine Verfärbung, oft eine Braunfärbung, verbunden.

Es sind weitere Konservierungsmaßnahmen für Kräuter bekannt wie das Pasteurisieren oder Sterilisieren, die unter anderem dem Erhalt des Geschmacks der frischen Kräuter dienen sollen. Jedoch werden Geschmack und Aussehen der Kräuter auch durch diese Maßnahmen beeinträchtigt.

Bekannt ist auch die Konservierung von Kräutern im sauren Milieu, die aber üblicherweise mit einer beschleunigten Farbveränderung verbunden ist.

Die US 5 368 873 beschreibt ein getrocknetes Gewürz, das vor der Trocknung mit einer ein osmotisches Mittel enthaltenden Flüssigkeit behandelt worden ist. Das osmotische Mittel muss in das Gewebe der Gewürzpflanze eindringen und nach Trocknung einen amorphen Feststoff bilden können. Als osmotisch wirkende Mittel werden. Sirupe und Zucker genannt.

Die EP 0 087 717 A1 schlägt ein rieselfähiges Würzpflanzentrockenprodukt vor, das Alkali- und/oder Erdalkalisalze anorganischer und/oder organischer Säuren, Proteine und/oder hydrierte Kohlenhydrate als Träger enthält und nach Versetzen mit dem Träger getrocknet, gegebenenfalls unter Temperaturerhöhung, wird.

Die US 4 572 836 beschreibt eine Gewürzmischung mit einen pH-Wert von < 4,5, die etwa 7,5 % NaCl, Antioxidationsmittel und 25 bis 70 Gew.% Speiseöl enthält. Die frischen Gewürze werden mit die Wasseraktivität senkenden Substanzen vermischt und zu einer angesäuerten Paste verarbeitet. In der Praxis zeigt sich jedoch, dass grüne Gewürze ihre ansprechende Farbe durch diese Maßnahmen verlieren und das um so schneller je saurer das Medium ist. Es kann festgestellt werden, dass diese Farbveränderungen fast immer als sichtbares Kriterium einer sensorischen Abweichung betrachtet werden können.

Die US 5 858 446 beschreibt eine Gewürzkrautzubereitung, bei der ein zerkleinertes frisches Gewürzkraut mit einer Substanz zur Einstellung der Wasseraktivität auf 0,90 oder weniger und einem Antioxidans vermischt wird, wobei die Gewürzkrautzubereitung in einer im wesentlichen sauerstofffreien Atmosphäre gelagert wird.

Die US 4,832,969 beschreibt ein Verfahren zum Herstellen von getrockneten grünen Gemüsesorten, das die aufeinanderfolgenden Schritte eines Blanchieren des rohen Gemüses in einem heißen wäßrigen Fluid zur Inaktivierung der Enzymaktivität, eines Einweichens des blanchierten Gemüses in einer Infusionslösung umfassend Salz, Zuckeralkohol, Zucker und Puffer, und eines Trocknens der eingeweichten Gemüsestücke zur Absenkung des a_{w}-Wertes umfaßt.

Der Erfindung liegt die Aufgabe zugrunde, ein Verfahren zur Konservierung von Gewürzkräutern zur Verfügung zu stellen, das für frische Kräuter oder teildehydratisierte Kräuter mit einem Feuchtegehalt von mindestens 30 Gew.-% anwendbar ist, wobei die Gewürzkrautzubereitung weitgehend den Geschmack der frischen Kräuter erhalten soll und über einen langen Zeitraum stabil gegenüber Zersetzung durch Mikroorganismen, gegen eigene Enzyme und gegenüber Oxidation ist. Dabei soll insbesondere auf Pasteurisierung und Tiefkühllagerung verzichtet werden, da diese Maßnahmen den Preis des Produktes erhöhen und das Kaufverhalten der Verbraucher negativ beeinflussen könnten.

Erfindungsgemäß wird diese Aufgabe durch eine konservierte Zubereitung gemäß Anspruch 1 gelöst.

Vorteilhafterweise ist der pH-Wert der Zubereitung um 1,5 bis 2,5, am bevorzugtesten um etwa 2 Punkte erhöht.

Der Einstellung der Wasseraktivität dient vorzugsweise ein Anteil an Speisesalz von mindestens etwa 10 Gew.-%, vorzugsweise 20 Gew.-% oder mehr, bezogen auf die Masse der Zubereitung.

In einer bevorzugten Ausführungsform der Erfindung ist der pH-Wert durch Zugabe wenigstens einer Substanz eingestellt, ausgewählt unter Natriumcarbonat, Natriumhydrogencarbonat, Magnesiumcarbonat und Calciumcarbonat.

Weiterhin betrifft die Erfindung ein Verfahren zur Herstellung einer konservierten Zubereitung gemäß Anspruch 7.

Bevorzugte Ausführungsformen ergeben sich aus den Unteransprüchen.

Dabei wird der Konservierungsmischung zur Einstellung der Wasseraktivität der Zubereitung vorzugsweise Speisesalz in einer Menge zugesetzt, die ausreichend ist, um den Anteil an Speisesalz in der Zubereitung so einzustellen, daß er, bezogen auf die Masse der Zubereitung, mindestens etwa 10 Gew.-% beträgt.

Weiter ist das Verfahren gekennzeichnet durch eine Konservierungsmischung, der zur Erhöhung des pH-Wertes mindestens eine Substanz ausgewählt unter Natriumcarbonat, Natriumhydrogencarbonat, Magnesiumcarbonat und/oder Calciumcarbonat zugesetzt wird.

In einer bevorzugten Ausführungsform des erfindungsgemäßen Verfahrens liegt der Anteil der Konservierungsmischung, bezogen auf die Masse der Zubereitung, zwischen etwa 25 und 35 Gew.-%.

Überraschenderweise wurde festgestellt, daß durch die Kombination der drei folgenden Merkmale: 1. Erhöhung des pH-Wertes um mindestens 1,0 Punkte, verglichen mit dem pH-Wert des entsprechenden Gewürzkrautes oder der entsprechenden Mischung von Gewürzkräutern nach Zusatz der die Wasseraktivität einstellenden Zusammensetzung, wodurch der pH-Wert deutlich über den zur Konservierung von Gewürzkräutern gängigen pH-Werten von maximal etwa 4 und üblicherweise auch deutlich über dem physiologischen pH-Wert des Gewürzkrautes liegt, vorzugsweise durch den Zusatz von Substanzen, wie Natriumcarbonat, Natriumhydrogencarbonat, Magnesiumcarbonat, Calciumcarbonat, etc. in einer entsprechenden Menge; 2. Einstellung der Wasseraktivität der Zubereitung auf 0,90 oder weniger, vorzugsweise durch den Zusatz von Speisesalz in einer entsprechenden Menge; und 3. Zusatz von Antioxidans und/oder Lagerung unter Sauerstoffabschirmung, eine Gewürzzubereitung erhalten werden kann, die den Frischgeschmack und das frische Aussehen der Gewürzkräuter über einen langen Zeitraum erhält. Insbesondere war nicht vorherzusehen, daß bei dem erfindungsgemäßen hohen pH-Wert im Zusammenspiel mit der niedrigen Wasseraktivität die erreichte Keimreduzierung erreicht und gleichzeitig in einfacher Weise die mit der Erhöhung des pH-Wertes üblicherweise einhergehende Oxidation nahezu vollständig zurückgedrängt werden kann.

Die erfindungsgemäße Zubereitung behält den sogenannten frischen Grüncharakter des frisch geernteten Krautes über einen Zeitraum von mindestens 3 Monaten, wobei bei einer Lagerung im Kühlschrank, d.h. bei 3 bis 5°C, ein unverändert hervorragendes Produkt noch nach 18 Monaten zu beobachten ist.

Ein wichtiger Aspekt der Konservierung gemäß der vorliegenden Erfindung ist die Erhöhung eines pH-Wertes um mindestens 1,0 Punkte, verglichen mit den pH-Werten des entsprechenden Gewürzkrautes oder der entsprechenden Mischung von Gewürzkräutern nach Zusatz der die Wasseraktivität einstellenden Zusammensetzung. Der absolute pH-Wert der endgültigen konservierten Zubereitung kann dabei in Abhängigkeit von dem physiologischen pH-Wert des eingesetzten Gewürzkrautes bzw. der eingesetzten Mischung von Gewürzkräutern schwanken. Konservierte Zubereitungen von Gewürzkräutern mit einem ursprünglich relativ niedrigen pH, wie bspw. Oregano, haben in der konservierten Zubereitung einen pH-Wert von etwa 6,5 bis 7, während andere Gewürzkräuter, die bereits in ihrem ursprünglichen Zustand einen höheren pH-Wert aufweisen, wie bspw. Petersilie, in der endgültigen konservierten Zubereitung einen pH-Wert von 8 bis 9 aufweisen. Offensichtlich ist es zur Erreichung der erfindungsgemäß gewünschten Wirkung erforderlich, daß ein pH-Sprung von entsprechender Höhe stattfindet, obgleich gegenwärtig noch nicht erklärbar ist, aus welchem Grunde.

Für die Einstellung des pH-Wertes werden in der Lebensmittelindustrie übliche Puffergemische eingesetzt insbesondere die obengenannten Alkali- und Erdalkalimetallsalze von Kohlensäure. Weiterhin geeignet sind Alkali- und Erdalkalimetallsalze anderer anorganischer oder organischer Säuren wie Phosphorsäure, Zitronensäure, Milchsäure und Aminosäuren. Außerdem sind aber auch basische Verbindungen wie Natriumhydroxid, Kaliumhydroxid oder dergleichen geeignet.

Zur Einstellung eines geeigneten pH-Wertes sind üblicherweise Mengen von 0,1 bis 5 Gew.-%, bezogen auf die Masse der Zubereitung, ausreichend. Wie in den Beispielen unten gezeigt, liegt die Menge an beispielsweise Natriumcarbonat zur Erhöhung des pH-Wertes um 1,5 und 2,5 Punkte bei einer Menge von 0,25 bis 1,0 Gew.-%.

Ein zweiter wichtiger Aspekt der erfindungsgemäßen Zubereitung bzw. des erfindungsgemä-ßen Konservierungsverfahrens ist die Einstellung der Wasseraktivität auf 0,90 oder weniger, bevorzugt auf unter 0,80, wobei diese Maßnahme allein, wie bereits oben ausgeführt, bereits aus dem Stand der Technik bekannt ist, bspw. aus der U.S. 5 858 446. Der positive Effekt beruht darauf, daß bei geringerer Wasseraktivität das Wachstum von Mikroorganismen gehemmt ist. Der überraschende synergistische Effekt der Kombination mit dem beschriebenen pH-Sprung ist allerdings aus dem Stand der Technik nicht bekannt.

Wie bereits in der obengenannten U.S. 5 858 446 näher beschrieben, wird zur Einstellung der Wasseraktivität ein für die Verwendung in Lebensmitteln zugelassenes Salz verwendet, nämlich Natriumchlorid, Kaliumchlorid, Calciumchlorid, Natriumcitrat oder Natriumlactat. Gemäß der vorliegenden Erfindung wird vorzugsweise Natriumchlorid, d.h. Speisesalz, eingesetzt, welches in einer solchen Menge zugesetzt wird, daß der Anteil an Speisesalz in der Zubereitung bei mindestens 10 Gew.-%, bevorzugt 20 Gew.-% oder mehr liegt. In den unten beschriebenen Beispielen liegt der Gehalt an Speisesalz bei 25 Gew.-%, wodurch ein a_{w}-Wert von 0,71 - 0,75 erreicht wird. Vorzugsweise liegt das Speisesalz zur Beschleunigung des Lösens des Salzes in mikronisierter Form vor (sogenanntes Mikrosalz).

Es ist festgestellt worden, daß der Zusatz der die Wasseraktivität auf den erforderlichen Wert einstellenden Substanz, die üblicherweise ein Elektrolyt darstellt, wie bspw. Speisesalz, den pH-Wert des Gewürzkrautes deutlich senkt, d.h. ins Saure verschiebt, wie auch aus den Tabellen in den nachfolgenden Beispielen deutlich wird. Erfindungsgemäß wird der pH-Wert der Zubereitung, verglichen mit diesem pH-Wert, durch den Zusatz entsprechender Substanzen, wie bspw. Natriumcarbonat, dann um mindestens 1,0 Punkte erhöht, was ihn üblicherweise auch wieder deutlich über den physiologischen pH-Wert des Gewürzkrautes anhebt.

Als dritte Komponente der erfindungsgemäßen Konservierung ist es erforderlich, ein sogenanntes Antioxidans zuzusetzen, d.h. eine in der Lebensmitteltechnologie bekannte Substanz zur Hemmung der Oxidation. Besonders geeignet ist hier beispielsweise Natriumascorbat. Selbstverständlich ist die Verwendung derartiger Substanzen in konservierten Gewürzkrautzusammensetzungen bereits aus dem Stand der Technik bekannt, wie bspw. aus der bereits zitierten U.S. 5 858 446. Überraschend war es allerdings, daß der Zusatz dieses üblichen Antioxidans in üblichen Mengen geeignet war, der durch die Erhöhung des pH-Wertes auftretenden starken Oxidation so wirkungsvoll entgegenzuwirken, wie dies beobachtet wurde.

Der Gehalt an Antioxidans in der Zubereitung liegt bei 2 bis 5 Gew.-%, vorzugsweise bei etwa 4 Gew.-% von z.B. Natriumascorbat.

Als Alternative zur Verwendung eines Antioxidans kann eine Lagerung unter Sauerstoffabschirmung vorgesehen sein. Dies kann bspw. eine Vakuumverpackung sein, die Beaufschlagung mit einem Inertgas, wie bspw. Stickstoff, oder die Lagerung unter sauerstoffabschirmenden Flüssigkeiten, wie Speiseöl.

Beim erfindungsgemäßen Konservierungsverfahren wird das Gewürzkraut oder die Gewürzkrautmischung entweder als Frischkraut oder teildehydratisiert mit einem Feuchtegehalt von mindestens 30 Gew.-% vorgelegt. Bei einem stärkeren Dehydratisierungsgrad werden Aussehen und Sensorik bereits stark beeinträchtigt. Das erfindungsgemäße Konservierungsverfahren ist besonders gut geeignet zur Konservierung von Frischkräutern.

Unter Gewürzkräutern werden im Sinne der vorliegenden Erfindung Pflanzen oder Pflanzenteile verstanden, die zur Modifizierung und/oder Verfeinerung des Geschmackes bei der Lebensmittelzubereitung eingesetzt werden. Solche Gewürzkräuter sind beispielsweise Basilikum, Thymian, Salbei, Koriander, Dill, Oregano, Majoran, Rosmarin, Petersilie, Minze, Pfefferminze, Knoblauch und Schnittlauch. Diese können selbstverständlich auch in beliebigen Mischungen eingesetzt werden.

Nach dem erfindungsgemäßen Verfahren wird das frische oder teildehydratisierte Gewürzkraut zerkleinert, wobei nach oder während des Zerkleinerns eine Konservierungsmischung zugesetzt wird, welche die die Wasseraktivität einstellende Substanz sowie die Verbindung zur Erhöhung des pH-Wertes in entsprechenden Mengenverhältnissen enthält. Vorzugsweise wird auch das Antioxidans bereits der Konservierungsmischung zugesetzt, es kann aber auch unmittelbar nach der Mischung von Gewürzkraut und Konservierungsmischung zugesetzt werden. Für eine Optimierung des Konservierungsverfahrens ist es vorteilhaft, das gesamte Verfahren oder zumindest wesentliche Teilschritte desselben unter Sauerstoffabschluß durchzuführen.

Der Anteil an Konservierungsmischung an der erfindungsgemäßen konservierten Zubereitung beträgt 20 bis 50 Gew.-%, vorzugsweise 25 bis 35 Gew.-% und am bevorzugtesten etwa 30 Gew.-%, jeweils bezogen auf die Masse der erfindungsgemäßen Zubereitung.

Die Vorteile des erfindungsgemäßen Konservierungsverfahrens bzw. die vorteilhaften Eigenschaften der erfindungsgemäßen konservierten Gewürzkrautzubereitung kann anhand der beigefügten Tabellen I bis IV belegt werden, in denen über einen Zeitraum von vier Wochen anhand einer Werteskala von 1 bis 6 Farbe und Aroma von vier verschiedenen Gewürzkrautzubereitungen bewertet worden sind.

Beim Aroma entspricht die Note 1 sehr gut demjenigen eines frischen Krautes. Das Aroma schwächt sich von Note zu Note weiter ab, bis es bei der Note 5 kaum noch geschmacklich typisch für das frische Kraut ist und einen stark abweichenden, verdorbenen Geschmack zeigt. Bei der Farbe entspricht die Note 1 der Farbe von frisch verarbeitetem Gewürz oder kann sogar noch intensiver sein. Von Note zu Note tritt eine immer stärkere Verfärbung und damit Abweichung von der frischen Farbe ab. Bei der Note 5 ist die Abweichung der Farbe so stark, daß sie nicht mehr einem frischen Gewürzkraut zugeordnet würde.

In der Regel verliert das Aroma in der Intensität und im Profil. Die Benotung geht in erster Linie auf die Typik bzw. das Aromaprofil, aber auch auf die Intensität ein, die charakteristisch für das jeweilige Gewürz sind. Daneben werden auch eventuell auftretende Fehlgeschmacke berücksichtigt. Das gleiche trifft auch auf die Farbe zu. Neben dem Verschwinden des ursprünglichen Grasgrüns erscheinen im Laufe der Zeit andere Töne wie Grau, Braun und Olivgrün. Auch hier werden die Zwischenstadien mit der entsprechenden Punktezahl benotet.

Vergleichsbeispiel 1 betrifft das frische Kraut ohne irgendwelche Konservierungsmaßnahmen. Vergleichsbeispiel 2 zeigt die Werte für das frische Kraut mit einem Zusatz von 25 Gew.-% NaCl. Vergleichsbeispiel 3 zeigt die Werte für das frische Kraut mit dem Zusatz von 25 Gew.-% NaCl sowie 4 Gew.-% Natriumascorbat. Vergleichsbeispiel 4 entspricht Vergleichsbeispiel 2 mit der Ausnahme, daß die Lagerung unter Sauerstoffabschluß, nämlich im Vakuum, erfolgte. Vergleichsbeispiel 5 entspricht Vergleichsbeispiel 3, ebenfalls mit Lagerung unter Vakuum.

Beispiel 1 zeigt die Werte für frisches Kraut mit 25 Gew.-% NaCl, 4 Gew.-% Natriumascorbat sowie Natriumcarbonat. Beispiel 2 entspricht von den Komponenten Beispiel 1, jedoch mit einem höheren Anteil an Natriumcarbonat. Beispiel 3 zeigt die Werte für ein vakuumverpacktes Frischkraut mit 25 Gew.-% NaCl und Natriumcarbonat, Beispiel 4 ein Frischkraut mit 25 Gew.-% NaCl, 4 Gew.-% Natriumascorbat und Natriumcarbonat, ebenfalls vakuumverpackt. Die Beispiele 5 bis 7 entsprechen einem Zusatz von 25 Gew.-% NaCl, 4 Gew.-% Natriumascorbat und Natriumcarbonat sowie Calciumcarbonat und/oder Magnesiumchlorid-Hexahydrat.

**Tabelle I**

| | | **V1** | **V2** | **V3** | **V4** | **V5** | **1** | **2** | **3** | **4** | **5** | **6** | **7** |
|---|---|---|---|---|---|---|---|---|---|---|---|---|---|
| Petersilie | | Normal Pur | Normal NaCl | Normal NaCl + NaAsc | Vakuum NaCl | Vakuum NaCl +NaAsc | Normal NaCl + NaAsc + Na₂CO₃ (0,25%) | Normal NaCl + NaAsc +Na₂CO₃ (0,6%) | Vakuum NaCl + Na₂CO₃ (0,6%) | Vakuum NaCl + NaAsc +Na₂CO₃ (0,6%) | Normal NaCl + NaAsc +Na₂CO₃ (0,6%) +CaCO₃ (0,5%) | Normal NaCl + NaAsc + Na₂CO₃ (0,6%) + MgCl₂ 6H₂O (0,5%) | Normal NaCl + NaAsc +Na₂CO₃ (0,6%) + CaCO₃ (0,6%) + MgCl₂ 6H₂O (0,5%) |
| pH | | 6,15 | 5,46 | 5,37 | 5,10 | 5,22 | 7,34 | 7,91 | 8,49 | 7,40 | 6,83 | 6,61 | 6,72 |
| 1 Woche | Farbe | 5 | 2 | 2 | 2 | 3 | 2 | 2 | 1-2 | 1 | 1 | 1 | 1 |
| | Aroma | 5 | 2 | 2 | 1-2 | 1-2 | 2 | 2 | 1 | 1 | 2 | 2 | 2 |
| 4 Wochen | Farbe | 5 | 3-4 | 3-4 | 3 | 3-4 | 2-3 | 2 | 2 | 2-3 | 1-2 | 2 | 2 |
| | Aroma | 5 | 3-4 | 3-4 | 3 | 3-4 | 3 | 3 | 2 | 2-3 | 2 | 2 | 3 |

**Tabelle II**

| | | **V1** | **V2** | **V3** | **V4** | **V5** | **1** | **2** | **3** | **4** | **5** | **6** | **7** |
|---|---|---|---|---|---|---|---|---|---|---|---|---|---|
| Basilikum | | Normal Pur | Normal NaCl | Normal NaCl + NaAsc | Vakuum NaCl | Vakuum NaCl +NaAsc | Normal NaCl + NaAsc + Na₂CO₃ (0,25%) | Normal NaCl + NaAsc +Na₂CO₃ (0,6%) | Vakuum NaCl + Na₂CO₃ (0,6%) | Vakuum NaCl + NaAsc +Na₂CO₃ (0,6%) | Normal NaCl + NaAsc +Na₂CO₃ (0,6%) + CaCO₃ (0,5%) | Normal NaCl + NaAsc + Na₂CO₃ (0,6%) + MgCl₂ 6H₂O (0,5%) | Normal NaCl + NaAsc +Na₂CO₃ (0,6%) + CaCO₃ (0,6%) + MgCl₂ 6H₂O (0,5%) |
| pH | | 6,15 | 5,46 | 5,75 | 5,29 | 5,36 | 7,55 | 8,2 | 8,12 | 7,42 | 7,51 | 7,44 | 7,47 |
| 1 Woche | Farbe | 5 | 2-3 | 3 | 2 | 3 | 1-2 | 1-2 | 1-2 | 1 | 1 | 1 | 1 |
| | Aroma | 5 | 3 | 3 | 2 | 2 | 2-3 | 2 | 1 | 1 | 1-2 | 1-2 | 1-2 |
| 4 Wochen | Farbe | 5 | 4-5 | 4 | 3 | 3 | 3 | 2 | 1-2 | 2 | 1-2 | 2 | 2 |
| | Aroma | 5 | 3 | 3 | 3 | 3 | 2-3 | 2 | 2 | 1-2 | 1-2 | 2 | 1-2 |

**Tabelle III**

| | | **V1** | **V2** | **V3** | **V4** | **V5** | **1** | **2** | **3** | **4** | **5** | **6** | **7** |
|---|---|---|---|---|---|---|---|---|---|---|---|---|---|
| Oregano | | Normal Pur | Normal NaCl | Normal NaCl + NaAse | Vakuum NaCl | Vakuum NaCl +NaAsc | Normal NaCl + NaAsc + Na₂CO₃ (0,25%) | Normal NaCl + NaAsc +Na₂CO₃ (0,6%) | Vakuum NaCl + Na₂CO₃ (0,6%) | Vakuum NaCl + NaAsc +Na₂CO₃ (0.6%) | Normal NaCl + NaAsc +Na₂CO₃ (0,6%) + CaCO₃ (0,5%) | Normal NaCl + NaAsc + Na₂CO₃ (0,6%) + MgCl₂ 6H₂O (0,5%) | Normal NaCl + NaAsc +Na₂CO₃ (0,6%) + CaCO₃ (0,6%) + MgCl₂ 6H₂O (0,5%) |
| pH | | 6,5 | 5,82 | 5,42 | 5,82 | 5,78 | 7,13 | 8,31 | 9,03 | 8,98 | 7,79 | 7,68 | 7,77 |
| 1 Woche | Farbe | 5 | 3 | 4-5 | 2 | 3 | 3 | 2-3 | 1-2 | 1 | 1 | 1 | 1 |
| | Aroma | 5 | 3 | 4 | 2 | 2 | 3 | 2-3 | 1 | 1 | 1-2 | 1-2 | 1-2 |
| 4 Wochen | Farbe | 5 | 5 | 4-5 | 4 | 4 | 3 | 1-2 | 1 | 1-2 | 1 | 1-2 | 1 |
| | Aroma | 5 | 3 | 3-4 | 2 | 2-3 | 2-3 | 2 | 2 | 1-2 | 1-2 | 1-2 | 1-2 |

**Tabelle IV**

| | | V1 | V2 | V3 | V4 | V5 | 1 | 2 | 3 | 4 | 5 | 6 | 7 |
|---|---|---|---|---|---|---|---|---|---|---|---|---|---|
| Rosmarin | | Normal Pur | Normal NaCl | Normal NaCl + NaAsc | Vakuum NaCl | Vakuum NaCl +NaAsc | Normal NaCl + NaAsc + Na₂CO₃ (0,25%) | Normal NaCl + NaAsc +Na₂CO₃ (0,6%) | Vakuum NaCl + Na₂CO₃ (0,6%) | Vakuum NaCl + NaAsc +Na₂CO₃ (0,6%) | Normal NaCl + NaAsc +Na₂CO₃ (0,6%) + CaCO₃ (0,5%) | Normal NaCl + NaAsc + Na₂CO₃ (0,6%) + MgCl₂ -6H₂O (0,5%) | Normal NaCl + NaAsc +Na₂CO₃ (0,6%) + CaCO₃ (0,6%) + MgCl₂ 6H₂O (0,5%) |
| pH | | 5,8 | 5,1 | 5,46 | 5,34 | 5,38 | 7,3 | 8,04 | 8,31 | 8,20 | 7,67 | 7,58 | 7,66 |
| 1 Woche | Farbe | 5 | 5 | 3 | 4 | 4-5 | 3 | 2-3 | 1-2 | 1 | 1 | 1 | 1 |
| | Aroma | 5 | 4 | 4 | 1-2 | 1-2 | 3-4 | 2 | 1 | 1 | 1-2 | 1-2 | 1-2 |
| 4 Wochen | Farbe | 5 | 5 | 4-5 | 4 | 4-5 | 3-4 | 3 | 1-2 | 1 | 2 | 2 | 2 |
| | Aroma | 5 | 3-4 | 4-5 | 2 | 2 | 3 | 2-3 | 1-2 | 1 | 1-2 | 2 | 1-2 |

Ebenso gute Ergebnisse konnte mit einem Sauerstoffabschluß unter Speiseöl statt in Vakuumverpackung erzielt werden. Die für einige Kräuter vorliegenden Langzeitergebnisse über mehrere Monate (bis zu 18 Monaten) zeigen, daß die Bewertungen, die sich nach vier Wochen ergaben, sich auch über einen langen Zeitraum nicht signifikant weiter verschlechterten.

Insgesamt ist aus den Tabellen deutlich erkennbar, daß in den Fällen der Beispiele 1 bis 7, die unter die Erfindung fallen, sowohl in Farbe als auch in Aroma deutlich bessere Bewertungen erzielt wurden als in den Vergleichsbeispielen.

## Patentansprüche

1. Konservierte Zubereitung mindestens eines Gewürzkrautes, erhältlich nach einem Verfahren nach einem der Ansprüche 7 bis 10, wobei das Gewürzkraut ausgewählt ist aus der Gruppe bestehend aus Basilikum, Thymian, Salbei, Koriander, Dill, Oregano, Majoran, Rosmarin, Petersilie, Minze, Pfefferminze, Knoblauch und Schnittlauch oder Mischungen derselben, mit einem Gehalt an mindestens einer die Wasseraktivität der Zubereitung auf 0,90 oder weniger einstellenden Zusammensetzung, wobei hierfür Natriumchlorid, Kaliumchlorid, Calciumchlorid, Natriumcitrat oder Natriumlactat in ausreichender Menge verwendet wird, und mit einem Gehalt an mindestens einer den pH-Wert der Zubereitung, verglichen mit dem pH-Wert des Gewürzkrautes (der Gewürzkräuter) nach Zusatz der Zusammensetzung zur Einstellung der Wasseraktivität, um wenigstens 1,0 Punkte erhöhenden Substanz, die ausgewählt ist aus der Gruppe der Alkali- und Erdalkalimetallsalze von anorganischen oder organischen Säuren oder basischen Verbindungen, wobei die Zubereitung zusätzlich mindestens ein zugesetztes Antioxidans enthält und/oder unter Sauerstoffabschirmung abgepackt ist.

2. Zubereitung nach Anspruch 1, **dadurch gekennzeichnet, dass** der pH-Wert um 1,5 bis 2,5 Punkte erhöht ist.

3. Zubereitung nach Anspruch 2, **dadurch gekennzeichnet, dass** der pH-Wert um etwa 2 Punkte erhöht ist.

4. Zubereitung nach einem der vorangehenden Ansprüche, **dadurch gekennzeichnet, dass** sie zur Einstellung der erforderlichen Wasseraktivität einen Anteil an Speisesalz von mindestens etwa 10 Gew.-%, bezogen auf die Masse der Zubereitung, aufweist.

5. Zubereitung nach Anspruch 4, **dadurch gekennzeichnet, dass** der Anteil an Speisesalz bei 20 Gew.% oder mehr liegt.

6. Zubereitung nach einem der vorangehenden Ansprüche, **dadurch gekennzeichnet, dass** die Substanz(en) ausgewählt ist (sind) aus der Gruppe, die aus Natriumcarbonat, Natriumhydrogencarbonat, Magnesiumcarbonat und Calciumcarbonat besteht.

7. Verfahren zur Herstellung einer konservierten Zubereitung mindestens eines Gewürzkrautes, welches aus den Schritten besteht:
- Vorlegen des Gewürzkrautes (der Gewürzkräuter) mit einem Feuchtegehalt von mindestens 30 Gewichtsprozent, wobei das Gewürzkraut (die Gewürzkräuter) ausgewählt wird bzw. werden aus der Gruppe bestehend aus Basilikum, Thymian, Salbei, Koriander, Dill, Oregano, Majoran, Rosmarin, Petersilie, Minze, Pfefferminze, Knoblauch und Schnittlauch oder Mischungen derselben,
- Vermischen des Gewürzkrautes (der Gewürzkräuter), nach oder während des Zerkleinems, mit einer Konservierungsmischung, die mindestens eine die Wasseraktivität einstellende Zusammensetzung in einer Menge enthält, die ausreichend ist, um die Wasseraktivität in der Zubereitung auf 0,90 oder weniger einzustellen, wobei hierfür Natriumchlorid, Kaliumchlorid, Calciumchlorid, Natriumcitrat oder Natriumlactat in ausreichender Menge verwendet wird, und mindestens eine Substanz zur Erhöhung des pH-Werts in einer Menge enthält, die ausreichend ist, um den pH-Wert, verglichen mit dem pH-Wert des Gewürzkrautes (der Gewürzkräuter) nach Zusatz der die Wasseraktivität einstellenden Zusammensetzung, um mindestens 1,0 Punkte zu erhöhen, wobei diese Substanz ausgewählt ist aus der Gruppe der Alkali- und Erdalkalimetallsalze von anorganischen oder organischen Säuren oder basischen Verbindungen,
- Zusetzen der Konservierungsmischung oder der Mischung aus Gewürzkraut (Gewürzkräutern) und Konservierungsmischung mindestens eines Antioxidans und/oder Abpacken der Zubereitung unter Sauerstoffabschirmung.

8. Verfahren nach Anspruch 7, **dadurch gekennzeichnet, dass** der Konservierungsmischung zur Einstellung der Wasseraktivität der Zubereitung Speisesalz in einer Menge zugesetzt wird, die ausreichend ist, um den Anteil an Speisesalz in der Zubereitung so einzustellen, dass er, bezogen auf die Masse der Zubereitung, mindestens etwa 10 Gew.% beträgt.

9. Verfahren nach Anspruch 7 oder 8, **dadurch gekennzeichnet, dass** als Alkali- und Erdalkalimetallsalze Natriumcarbonat, Natriumhydrogencarbonat, Magnesiumcarbonat und/oder Calciumcarbonat verwendet wird.

10. Verfahren nach einem der Ansprüche 7 bis 9, **dadurch gekennzeichnet, dass** der Anteil der Konservierungsmischung, bezogen auf die Masse der Zubereitung, zwischen etwa 25 und 35 Gew.-% liegt.

## Claims

1. Preserved preparation of at least one herb obtainable by a process according to one of the claims 7 to 10, wherein the herb is selected from the group consisting of basil, thyme, sage, coriander, dill, oregano, marjoram, rosemary, parsley, mint, peppermint, garlic and chives or mixtures of the same, having a content of at least one composition setting the water activity of the preparation to 0.90 or less, wherein for this use is made of sodium chloride, potassium chloride, calcium chloride, sodium citrate or sodium lactate in a sufficient amount, and having a content of at least one substance increasing the pH of the preparation by at least 1.0 compared with the pH of the herb (the herbs) after addition of the composition for setting the water activity, which substance is selected from the group of alkali metal salts and alkaline earth metal salts of inorganic or organic acids or basic compounds, wherein the preparation additionally contains at least one antioxidant and/or is packaged with protection from oxygen.

2. Preparation according to Claim 1, **characterized in that** the pH is increased by 1.5 to 2.5.

3. Preparation according to Claim 2, **characterized in that** the pH is increased by about 2.

4. Preparation according to one of the preceding claims, **characterized in that**, for setting the required water activity, it has a fraction of edible salt of at least about 10% by weight, based on the mass of the preparation.

5. Preparation according to Claim 4, **characterized in that** the fraction of edible salt is 20% by weight or more.

6. Preparation according to one of the preceding claims, **characterized in that** the substance(s) is (are) selected from the group consisting of sodium carbonate, sodium hydrogencarbonate, magnesium carbonate and calcium carbonate.

7. Process for producing a preserving preparation of at least one herb, comprising the steps of
presenting the herb (the herbs) at a moisture content of at least 30% by weight, wherein the herb (the herbs) is or are selected from the group consisting of basil, thyme, sage, coriander, dill, oregano, marjoram, rosemary, parsley, mint, peppermint, garlic and chives or mixtures of the same;
mixing the herb (the herbs), after or during the comminution, with a preserving mixture which contains at least one composition setting the water activity in an amount which is sufficient to set the water activity in the preparation to 0.90 or below, wherein for this use is made of sodium chloride, potassium chloride, calcium chloride, sodium citrate or sodium lactate in a sufficient amount, and containing at least one substance for increasing the pH in an amount which is sufficient to increase the pH, by at least 1.0 compared with the pH of the herb (the herbs) after addition of the composition setting the water activity, wherein this substance is selected from the group of alkali metal salts and alkaline earth metal salts of inorganic or organic acids or basic compounds;
adding of at least one antioxidant to the preservation mixture or the mixture of herb (herbs) and preservation mixture and/or packaging of the preparation with protection from oxygen.

8. Process according to Claim 7, **characterized in that**, for setting the water activity of the preparation, edible salt is added to the preservation mixture in an amount which is sufficient to set the fraction of edible salt in the preparation in such a manner that it is at least about 10% by weight, based on the mass of the preparation.

9. Process according to Claim 7 or 8, **characterized in that**, as alkali metal salt and alkaline earth metal salt, use is made of sodium carbonate, sodium hydrogencarbonate, magnesium carbonate and/or calcium carbonate.

10. Process according to one of Claims 7 to 9, **characterized in that** the fraction of the preservation mixture based on the mass of the preparation is between about 25 and 35% by weight.

## Revendications

1. Préparation en conserve constituée d'une herbe aromatique disponible par un procédé selon l'une des revendications 7 à 10, la herbe est choisie dans le groupe compose de basilique, thym, sauge, coriandre, aneth, origan, marjolaine, romarin, persil, menthe, menthe poivrée, ail et ciboulette ou des mélanges de ceux-ci, contenant au moins une composition qui fixe 1' activité de l'eau de la préparation a 0,90 ou moins, moyennant quoi pour ce faire chlorure de sodium, chlorure de potassium, chlorure de calcium, citrate de sodium ou lactate de sodium est utilisé en quantité suffisante, et contenant au moins une substance augmentant d'au moins 1,0 point le pH de la préparation, par rapport au pH de l'herbe aromatique (des herbes aromatiques) après l'ajout de la composition permettant de fixer l'activité de l'eau, laquelle substance est choisie dans le groupe des sels alcalins et de métaux alcalino-terreux d'acides anorganiques ou organiques ou de liaisons basiques, moyennant quoi la préparation comprend en outre au moins un antioxydant et/ou est conditionnée sous vide d'air.

2. Préparation selon la revendication 1, **caractérisée en ce que** le pH est augmenté de 1,5 à 2,5 points.

3. Préparation selon la revendication 2, **caractérisée en ce que** le pH est augmenté d'environ 2 points.

4. Préparation selon l'une des revendications précédentes, **caractérisée en ce qu'**elle présente, afin d'ajuster l'activité de l'eau nécessaire, une part de sel alimentaire représentant au moins environ 10% en poids de la masse de la préparation.

5. Préparation selon la revendication 4, **caractérisée en ce que** la part de sel alimentaire se situe autour de 20% en poids ou plus.

6. Préparation selon l'une des revendications précédentes, **caractérisée en ce que** la/les substance(s) est/sont choisie (s) dans le groupe composé de carbonate de sodium, bicarbonate de sodium, carbonate de magnésium ou carbonate de calcium.

7. Procédé de fabrication d'une préparation en conserve constituée d'au moins une herbe aromatique, comporte les étapes
la mise en place l'herbe aromatique (Les herbes aromatiques), produite(s) avec une teneur en humidité d'au moins 30% en poids, l'herbe aromatique (les herbs aromatiques) est/sont choisie(s) dans le groupe constitué de basilique, thym, sauge, coriandre, aneth, origan, marjolaine, romarin, persil, menthe, menthe poivrée, ail et ciboulette ou des mélanges de ceux-ci ;
le brassage de l'herbe aromatique (les herbes aromatiques) après ou pendant leur réduction en petits morceaux avec un mélange de conservation, qui comprend au moins une composition fixant l'activité de l'eau selon une quantité qui est suffisante pour fixer l'activité de l'eau dans la préparation à 0,90 ou moins, moyennant quoi, pour ce faire chlorure de sodium, chlorure de potassium, chlorure de calcium, citrate de sodium ou lactate de sodium est utilise en quantité suffisante, et qui comprend au moins une substance permettant d'augmenter le pH selon une quantité suffisante pour augmenter d'au moins 1,0 point le pH de la préparation, par rapport au pH de l'herbe aromatique (des herbes aromatiques) après l'ajout de la composition fixant l'activité de l'eau, moyennant quoi la substance est choisie dans le groupe des sels alcalins et de métaux alcalino-terreux d'acides anorganiques ou organiques ou de liaisons basiques ;
la adjonction de au moins un antioxydant au mélange de conservation ou au mélange constitue d'une d'herbe aromatique (d'herbes aromatiques) et du mélange de conservation et/ou le emballage de la préparation sous vide d'air.

8. Procédé selon la revendication 7, **caractérise en ce qu'**un sel alimentaire est ajouté au mélange de conservation permettant de fixer l'activité de l'eau de la préparation, selon une quantité suffisante pour fixer la part de sel alimentaire dans la préparation à au moins 10% en poids de la masse de la préparation.

9. Procédé selon la revendication 7 ou 8, **caractérise en ce que** les carbonate de sodium, bicarbonate de sodium, carbonate de magnésium et/ou carbonate de calcium sont utilises en tant que sels alcalins ou de métaux alcalinoterreux.

10. Procède selon l'une des revendications 7 à 9, **caractérise en ce que** la part du mélange de conservation se situe entre environ 25 et 35 % en poids de la masse de la préparation.
